# EUROPEAN PATENT APPLICATION

(11) **EP 0 903 456 A1**
(43) Date of publication of application: **24.03.1999**
(21) Application number: 98202740.1
(22) Date of filing: 17.08.1998
(51) Int. Cl.: E05B 49/00, H04B 7/08

(54) **Receiver for an automotive remote keyless entry system**

(30) Priority: 11.09.1997 US 927595
(71) Applicant: DELCO ELECTRONICS CORPORATION, Kokomo Indiana 46902 (US)
(72) Inventor: Hawes, Kevin Joseph, Greentown, Indiana 46936 (US); Woloch, Franck Bruce, Almont, Michigan 48003 (US); Rohr, Stephen Newton, Carmel, Indiana 46033 (US); Hite, John Allen, Kokomo, Indiana 46902 (US)
(74) Representative: Denton, Michael John

(57) **Abstract**

An enhanced radio frequency receiver for the remote unit (12) of a keyless entry system (10) includes at least two electrically isolated mutually perpendicular antennas (60a, 60b) and a receiver circuit (54) that combines the individually received signals in additive relationship. The remote unit includes an air core antenna (60a) and at least one ferrite core antenna (60b) perpendicular to the magnetic axis of the air core antenna (60a). If desired, an additional ferrite core antenna may be provided with an orientation that is mutually perpendicular with both the air core antenna (60a) and the first ferrite core antenna (60b). Radio frequency signals received by the individual antennas are concurrently amplified and detected, and then combined and amplified to form an input to a controller (52) of the remote unit (12).

## Description

### Technical Field

This invention relates to an automotive keyless entry system, and more particularly to a radio frequency receiver having enhanced signal reception.

### Background of the Invention

Developed primarily as a security and convenience feature, automotive remote keyless entry systems enable a driver to remotely lock or unlock doors, release the trunk, turn on interior lights, or sound a panic alarm. Other functions, such as remote door opening, engine starting and personalization of seat position and accessories, have also been proposed. The functions are initiated by a remote unit (frequently in the form of a key fob) which communicates with a vehicle controller. For security purposes, fairly elaborate password strategies requiring bi-directional communication have been developed. Thus, the remote unit is not only a transmitter, but also a receiver.

In one type of system, generally referred to as active, the functions are initiated by the driver, who presses a corresponding button on a remote unit, for example. In other systems, generally referred to as passive, certain functions are initiated automatically whenever the remote unit is brought into proximity with the vehicle. In such passive systems, it is also known to install multiple antennas about or in the vehicle so that only certain functions in the immediate vicinity of the remote unit are initiated.

Most vehicle manufacturers require the remote unit to function reliably from a distance of up to approximately 10 meters. In addition, systems are generally required to achieve acceptable and roughly equivalent performance regardless of the orientation of the remote unit relative to the vehicle. This requirement is particularly difficult to meet in passive systems, since the remote unit is typically stowed away in the driver's pocket or purse.

In order to satisfy the above-mentioned requirements, it has been proposed to equip the vehicle or the remote unit with two or more colocated and mutually perpendicular antennas. In U.S. Patent No. 4,897,644, for example, side-zone antennas are installed on the door glass and nearby outside rear view mirror surfaces. In such systems, either multiplex circuits or multi-phase demodulation have been employed to detect the received communication. These approaches are typically complex and therefore costly to implement.

### Summary of the Invention

The present invention is directed to an improved radio frequency receiver for the remote unit of a keyless entry system, including at least two electrically isolated mutually perpendicular antennas and a receiver circuit that combines the individually received signals in additive relationship.

In the preferred embodiment, the remote unit includes an air core antenna (which may be formed by conductive traces on a printed circuit board or by a conventional wire wound coil) and at least one ferrite core antenna mounted on the circuit board, perpendicular to the magnetic axis of the air core antenna. If desired, an additional ferrite core antenna may be mounted on the circuit board with an orientation that is mutually perpendicular with both the air core antenna and the first ferrite core antenna.

Radio frequency signals received by the individual antennas are concurrently amplified and detected, and then combined and amplified to form an input to a controller of the remote unit. As compared with the known multiplex and phase demodulation schemes, the receiver of this invention provides improved bandwidth and performance at reduced cost. In an exemplary mechanization of the present invention, amplitude modulated signals received by mutually perpendicular air core and ferrite core antennas were individually amplified and detected with Schottky diodes, wire-OR'ed and amplified to form a composite input for the remote unit controller.

### Brief Description of the Drawings

The present invention will now be described, by way of example, with reference to the accompanying drawings, in which:-
Figure 1 is a system diagram of a passive keyless entry system including a remote transceiver key fob in accordance with this invention.
Figure 2 is a block diagram of the remote transceiver key fob of Figure 1, including a radio frequency receiver circuit according to this invention.
Figure 3 is a mechanical schematic cut-away view of the remote transceiver key fob of Figure 1.
Figure 4 is an circuit diagram of the receiver circuit of Figure 2.
Figures 5A-5D graphically depict signals transmitted to and received by the receiver circuit of Figure 4.

### Description of the Preferred Embodiments

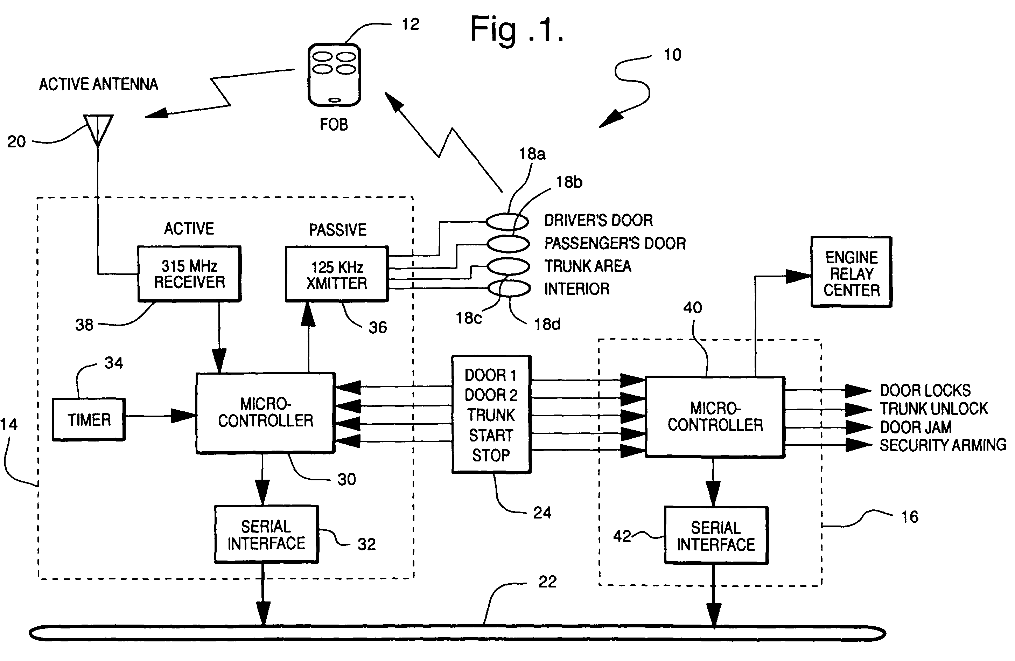

The signal additive radio frequency receiver of this invention is disclosed in the context of a passive keyless entry system, generally designated by the reference numeral 10 in Figure 1. The system 10 comprises a remote unit or fob 12, a Passive Entry Controller (PEC) module 14, and a Keyless Controller (KC) module 16. A number of passive antennas 18a-18d located in predefined zones of the vehicle are coupled to the PEC module 14 to support vehicle-to-fob communications over a 125 kHz amplitude modulated inductive link. The antennas 18a and 18b are located in the vicinity of the driver and passenger doors, respectively, the antenna 18c is located in the vicinity of the trunk, and the antenna 18d is located in the interior of the vehicle near the steering wheel. An active antenna 20 located centrally in the vehicle is coupled to the PEC module 14 to support fob-to-vehicle communications over a 315 MHz amplitude modulated link. The PEC module 14 communicates with the KC module 16 over a serial data bus 22, and the KC module 16 interfaces with various vehicle modules pertaining to door locking and unlocking, trunk unlocking, security systems, and engine starting and running.

The PEC module 14 includes a micro-controller 30, a serial interface 32 for coupling the controller 30 to bus 22, a timer unit 34, a 125 kHz transmitter 36 coupled to the passive antennas 18a-18d, and a 315 MHz receiver 38 coupled to the active antenna 20. The KC module 16 includes a micro-controller 40 and a serial interface 42. A number of switch inputs, generally designated at reference numeral 24, are provided as inputs to both the PEC module 14 and the KC module 16. These include door lock/unlock switches, trunk unlock switch, and engine start and stop switches.

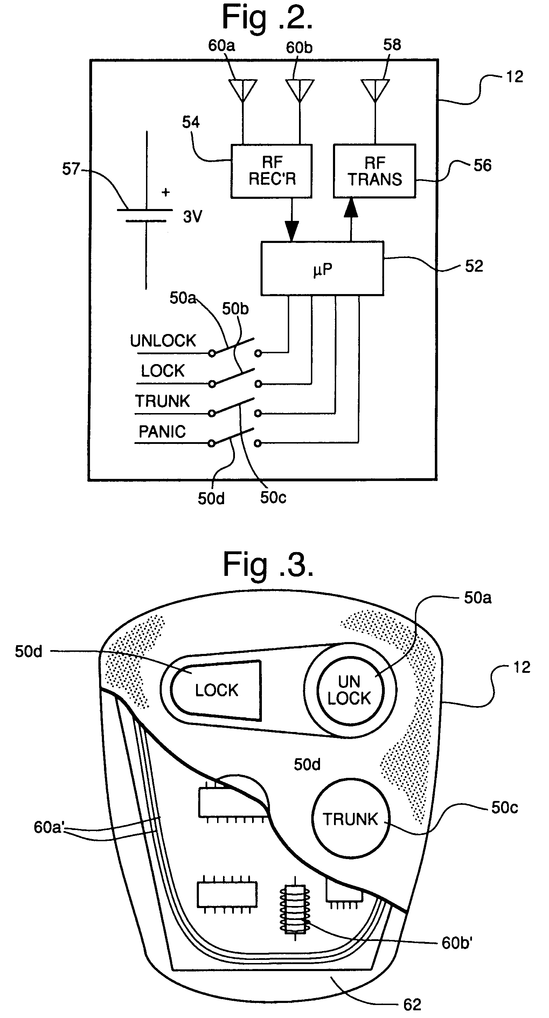

The fob 12, depicted in further detail in Figures 2-3, includes a plurality of push-button switches 50a-50d for operator initiated door unlocking, door locking, trunk unlocking and panic alarm. These switches are applied as inputs to microprocessor 52, which in turn, is coupled to RF receiver 54 and RF transmitter 56. The microprocessor 52, receiver 54 and transmitter 56 are all powered by an internal 3V lithium battery 57. To extend battery life, the microprocessor 52 normally operates in a standby or sleep state which consumes only about 1.0µA of current. The receiver operates continually, and draws about 12 uA of current. The transmitter 56 transmits to the receiver 38 of PEC module 14 via the internal antenna 58.

The transmitter 36 of PEC module 14 transmits signals to the fob 12 via one or more of the passive antennas 18a-18d, and the fob receiver 54 receives the transmitted signals via a pair of internal antennas 60a and 60b.

As illustrated below in reference to Figure 3, the antennas 60a and 60b are oriented mutually perpendicular for improved omni-directional communication with the passive antennas 18a-18d.

The above-described system supports both passive and active control functions. In an active mode, the driver manually depresses one or more of the fob buttons 50a-50d, initiating a suitable fob-to-vehicle communication via the antennas 58 and 20. In a passive mode, the PEC module 14 periodically transmits proximity alert signals via passive antennas 18a-18d for eliciting a response from the fob 12. In this case, the response from the fob 12 includes a vehicle zone signal, and the PEC module 14 signals the KC module 16 to activate a zone-specific function. For example, if the fob 12 is brought in proximity to the passive trunk antenna 18c, the fob response includes a trunk zone signal, commanding the PEC module 14 to signal the KC module 16 to unlock the trunk, just as though the fob's trunk unlock button 50c had been depressed. Upon entry into the vehicle, a similar communication enables engine starting and stopping via the start and stop buttons 24 located in the passenger compartment.

Obviously, the above-described system requires dependable communication between the fob 12 and PEC module 14. The most demanding requirement in this regard is the 125 kHz inductive link which supports the vehicle-to-fob communications. To facilitate such communications, the fob 12 is equipped with two mutually perpendicular receiver antennas 60a and 60b, as indicated above. Figure 3 illustrates a preferred mechanization in which the antenna 60a is an air core antenna, defined in part by a wire wound coil 60a' or a number of conductive traces 60a' on the fob circuit board 62; and the antenna 60b is a ferrite core antenna, defined in part by a discrete ferrite core inductor 60b' mounted flat on the circuit board 62. If desired, a third ferrite core antenna may be provided by mounting another discrete ferrite core inductor on circuit board 62, perpendicular to the inductor 60b' and coil 60a'. Each of the fob antennas 60a-60b has a magnetic axis coaxial with its turns, and magnetically couples with a nearby passive antenna 18a-18d to a greater or lesser extent depending on the relative orientation of the antennas. The fob antennas 60a-60b are electrically isolated so that neither will interfere with the magnetic coupling of the other. This significantly improves the vehicle-to-fob communications since one of the antennas will couple strongly with a nearby passive antenna even if the other is oriented perpendicular to the passive antenna.

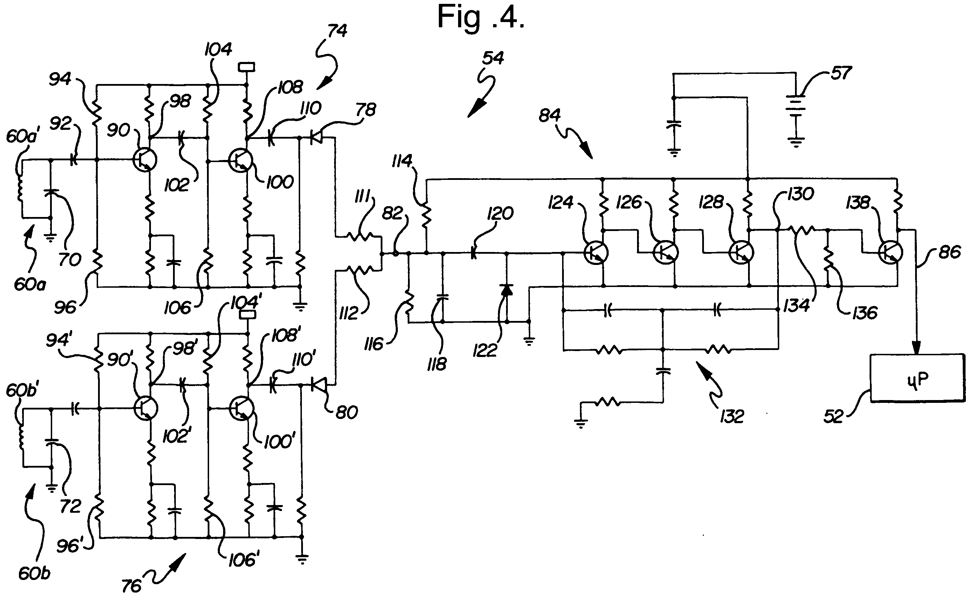

According to this invention, the fob 12 includes a receiver 54 that individually amplifies and detects the signals received by the fob antennas 60a and 60b, combines the signals, and then amplifies the combined signal to form an input to the microprocessor 52. An electrical circuit diagram of the receiver 54 is shown in Figure 4, in which the antenna 60a is shown as the parallel combination of air core inductor 60a' and capacitor 70, and antenna 60b is shown as the parallel combination of ferrite core inductor 60b' and capacitor 72. In each case, the inductor and parallel coupled capacitor form a resonant circuit tuned to the 125 kHz transmitter frequency of PEC module 14. In general, the amplitude modulated signals received by antennas 60a and 60b are capacitively coupled to the respective preamplifier circuits 74, 76, and then detected by the reverse-poled Schottky diodes 78 and 80, the anodes of which are diode OR'ed at junction 82, to form an input for amplifier 84. The output of amplifier 84 on line 86 is applied as an input to microprocessor 52.

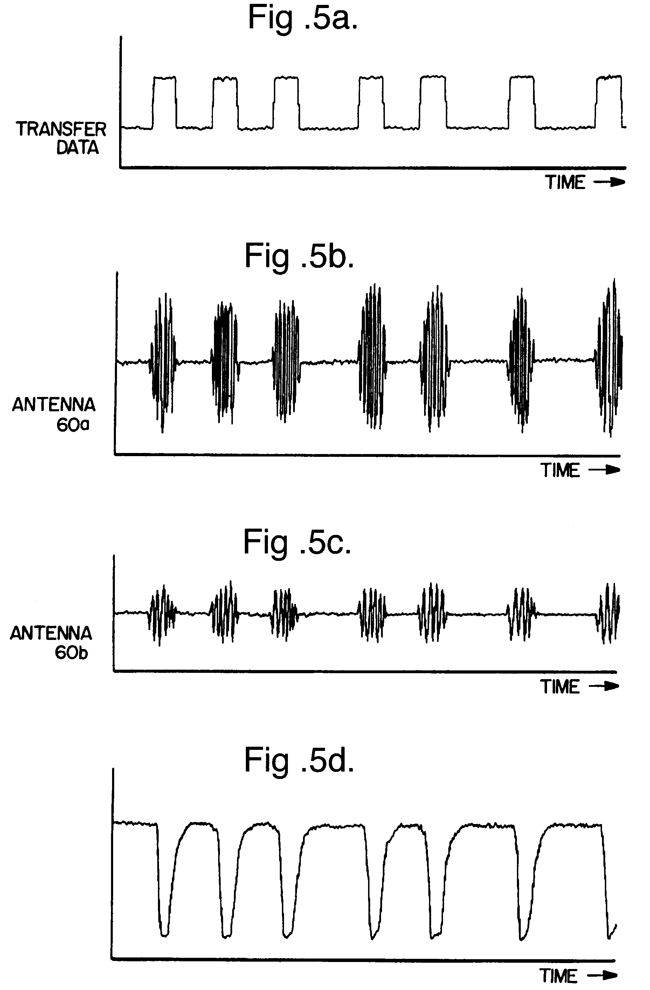

In the preamplifier 74, a received signal at antenna 60a is AC-coupled to the base of transistor 90 via capacitor 92. The input resistors 94 and 96 provide a DC offset for the AC signal voltage, and an inverted signal appears at the collector terminal 98. The terminal 98, in turn, is AC-coupled to the base of transistor 100 via capacitor 102, the resistors 104 and 106 re-establishing the DC offset voltage. This produces an amplified version of the received signal at the collector terminal 108, which in turn, is AC-coupled via capacitor 110 to the cathode of Schottky diode 78, which together with a few passive components described below, detects the amplitude modulated envelope of the received signal. Representative signals are seen in the graphs of Figures 5B-5D, which show a pair of received AC-coupled signals, and a detected envelope. The pre-amplifier 76 functions in the same manner as pre-amplifier 74, obviating the need to describe its operation here; corresponding components have been assigned similar, but primed, reference numerals. In mechanizations incorporating a third antenna oriented perpendicular to the antennas 60a and 60b, the receiver 54 would include a third identical preamplifier circuit and Schottky diode as described above.

The anodes of the two Schottky diodes 78 and 80 are coupled to junction 82 via the resistors 111 and 112. The normal or steady-state voltage at junction 82 is determined by the resistors 114 and 116, which are connected across battery 57, and form a charging circuit for the capacitor 118 connected in parallel with resistor 116. The capacitor 118 maintains the steady state voltage, but is discharged to a lower voltage through resistors 111 or 112 whenever the diodes 78 or 80 conduct. This circuit may be said to function as a diode OR circuit since the signals at 108 and 108' equally affect the voltage across capacitor 118. Thus, a combination of the received, amplified and detected signals from each of the antennas 60a and 60b appears at the junction 82. This is graphically illustrated in Figures 5A-5D, described below.

The detected envelope voltage at junction 82 is AC-coupled to the amplifier circuit 84 by capacitor 120, and the diode 122 performs half-wave rectification of the AC signal. The amplifier 84 provides three stages of amplification via transistors 124, 126 and 128, resulting in a greatly amplified but inverted signal at the transistor collector terminal 130. An RC feedback network generally designated by the reference numeral 132 feeds back a filtered version of the output signal at terminal 130 to the base of transistor 124. Finally, the amplified signal voltage at terminal 130 is voltage divided by the resistors 134 and 136, and applied to the base of transistor 138, which provides threshold detection and another voltage inversion. As indicated, the collector output on line 86 forms the signal input to microprocessor 52.

In operation, the passive antennas 18a-18d transmit a magnetic burst at 125 kHz, inducing a voltage in one or both of the tuned circuits 60a'/70 and 60b'/72. The voltages are individually amplified by the preamplifiers 74 and 76, causing the collectors of transistors 100 and 100' to oscillate at 125 kHz. The diodes 78 and 80 conduct on negative portions of the oscillations, discharging the capacitor 118, and resulting in negative-going voltage pulse at junction 82. The negative-going pulse is applied to amplifier 84, resulting in a positive-going pulse at terminal 130, which is inverted by transistor 138 to provide microprocessor 52 with a level-appropriate negative-going input pulse on line 86.

As indicated above, the graphs of Figures 5A-5D illustrate signals occurring in the above described system. Figure 5A depicts data provided by micro-controller 30 to the transmitter 36 of PEC module 14. The data is amplitude modulated, transmitted via antennas 18a-18d, and received by the fob antennas 60a and 60b. Figures 5B and 5C depict individual voltages coupled into the antennas 60a and 60b. As discussed, the strength of the received signals depends upon the orientation of the antennas 60a and 60b with respect to the nearest of the antennas 18a-18d. In the illustration of Figures 5A-5D, the electromagnetic coupling for antenna 60a is stronger than for antenna 60b. Figure 5D depicts the output signal on line 140, a representation of the signals as amplified, detected, combined and then amplified again.

In summary, the present invention provides a novel radio frequency receiver for the remote unit of a keyless entry system, that additively combines at least two signals individually received by electrically isolated mutually perpendicular antennas. The individually received signals are concurrently amplified and detected, and then combined and amplified to form an input to a controller of the remote fob unit. As compared with the known multiplex and phase demodulation schemes, the above-described receiver provides improved response time to data with inexpensive discrete components.

## Claims

1. A remote unit receiver circuit for receiving a short range magnetically radiated signal transmission from a keyless entry vehicle, comprising:
first and second electrically isolated antennas (60a, 60b) disposed perpendicular to each other for developing first and second induced signals in response to said radiated transmission;
first and second preamplifier circuits (74, 76) for individually amplifying said first and second signals;
a detection circuit (110, 110', 78, 80, 111,112, 115, 116, 118) for forming a voltage pulse representing a combined envelope voltage of the amplified first and second signals while maintaining electrical isolation between said first and second antennas (60a, 60b); and
an output amplifier (84) for amplifying said voltage pulse to form a signal corresponding to the transmission from the keyless entry vehicle.

2. The remote unit receiver circuit of Claim 1, wherein said detection circuit comprises:
a capacitor (118);
a charging circuit (114, 116) for charging the capacitor (118) to a steady state voltage; and
a discharging circuit (78, 80, 111, 112) including first and second diodes (78, 80) coupling the capacitor (118) to the amplified first and second signals.

3. The remote unit receiver circuit of Claim 2, wherein said discharging circuit (78, 80, 111, 112) additionally includes first and second resistors (111, 112) connected in series with said first and second diodes (78, 80), said diodes (78, 80) being poled to conduct current from said capacitor (118) to said first and second preamplifier circuits (74, 76), respectively.

4. The remote unit receiver circuit of Claim 2, wherein said first and second diodes (78, 80) are Schottky diodes.

5. The remote unit receiver circuit of Claim 1, wherein the first antenna (60a) includes an air core coil, and the second antenna (60b) includes a ferrite core inductor mounted flat on a circuit board (62) supporting the receiver circuit.
